# EUROPÄISCHE PATENTANMELDUNG

(11) **EP 3 348 434 A1**
(43) Veröffentlichungstag der Anmeldung: **18.07.2018**
(21) Anmeldenummer: 17151616.4
(22) Anmeldetag: 16.01.2017
(51) Int. Cl.: B60L 3/00, B60L 3/12, H02P 29/02

(54) **VERFAHREN ZUR ÜBERWACHUNG EINES ANTRIEBSSYSTEMS, INSBESONDERE EINES ANTRIEBSSTRANGS EINES ELEKTROFAHRZEUGS, SOWIE NACH DEM VERFAHREN ARBEITENDE STEUERUNGSEINRICHTUNG**

(71) Anmelder: Siemens Aktiengesellschaft, 80333 München (DE)
(72) Erfinder: Wiedmann, Karsten, 91052 Erlangen (DE)

(57) **Zusammenfassung**

Die Erfindung ist ein Verfahren zur Überwachung eines eine elektrische Maschine (102) und einen der elektrischen Maschine (102) vorgeschalteten Inverter (104) umfassenden Antriebssystems (10) sowie eine nach dem Verfahren arbeitende Steuerungseinrichtung, wobei in zwei parallelen, diversitären Signalpfaden (22, 26) jeweils ein Wert bezüglich einer von der Maschine (102) abgegebenen oder aufgenommenen Leistung und/oder bezüglich eines von der Maschine (102) abgegebenen Drehmoments ermittelt wird, wobei in zumindest einem der Signalpfade (22, 26) eine Zwischenkreisleistung des Inverters (104) oder die HVAC-Hochspannungswechselstromleistung der elektrischen Maschine (102) berücksichtigt wird und wobei die zumindest zwei Werte zum Vergleich einem Vergleicher (30) zugeführt werden sowie in Abhängigkeit vom Ergebnis des Vergleichs gegebenenfalls eine Ausnahmebehandlung ausgelöst wird.

## Beschreibung

Die Erfindung betrifft ein Verfahren zur Überwachung eines Antriebssystems, insbesondere eines Antriebsstrangs eines Elektrofahrzeugs, nämlich ein Verfahren zur Überwachung einer von dem Antriebssystem bzw. dem Antriebsstrang umfassten elektrischen Maschine. Im Weiteren betrifft die Erfindung auch eine nach dem Verfahren arbeitende Vorrichtung, zum Beispiel einen nach dem Verfahren arbeitenden und von der elektrischen Maschine umfassten Inverter.

Bei der Überwachung einer elektrischen Maschine im Antriebsstrang eines Elektrofahrzeugs wird beim Betrieb des Elektrofahrzeugs das jeweils abgegebene Drehmoment überwacht. Bekannte Überwachungsverfahren basieren auf einer möglichst genauen Schätzung des Drehmoments.

Eine solche Schätzung des Drehmoments ist allerdings dann nicht mehr möglich oder nicht mehr mit der notwendigen Genauigkeit möglich, wenn zum Beispiel eine Messfunktion ausgefallen ist.

Für Situationen, bei denen kein Rotorlagegeber vorhanden ist oder dieser defekt ist, wird die Rotorlage auf Basis der HVAC-Spannungen U_{HVAC} und HVAC-Ströme I_{HVAC} errechnet. Für eine sichere Errechnung der Rotorlage ist eine Erkennung einer eventuellen Fehlerhaftigkeit dieser Eingangsgrößen notwendig. Des Weiteren ist für den Berechnungsalgorithmus zu gewährleisten, dass dieser bei allen möglichen Werten stabil ist. Dies ist mit erheblichem Aufwand verbunden.

Eine Aufgabe der vorliegenden Erfindung besteht darin, ein Verfahren zur Überwachung eines Antriebssystems, insbesondere eines Antriebsstrangs eines Elektrofahrzeugs, anzugeben, bei dem Probleme bei der Ermittlung des Drehmoments sicher erkannt werden.

Diese Aufgabe wird erfindungsgemäß mittels eines Verfahrens zur Überwachung eines Antriebssystems, insbesondere mittels eines Verfahrens zur Überwachung eines Antriebsstrangs eines Elektrofahrzeugs, mit den Merkmalen des Anspruchs 1 gelöst. Dazu ist bei einem Verfahren zur Überwachung eines eine elektrische Maschine umfassenden Antriebssystems, insbesondere bei einem Verfahren zur Überwachung eines eine elektrische Maschine umfassenden Antriebsstrangs eines Elektrofahrzeugs, Folgendes vorgesehen: In zumindest zwei parallelen, diversitären Signalpfaden wird jeweils ein Wert bezüglich einer von der Maschine abgegebenen oder aufgenommenen Leistung und/oder bezüglich eines von der Maschine abgegebenen Drehmoments ermittelt. Dabei wird in zumindest einem der mindestens zwei Signalpfade eine Zwischenkreisleistung der elektrischen Maschine oder die Hochspannungsgleichstromleistung berücksichtigt. Zur Beurteilung eines Zustands des Antriebsstrangs werden die zumindest zwei Werte zum Vergleich einem Vergleicher zugeführt, welcher in Abhängigkeit vom Ergebnis des Vergleichs gegebenenfalls eine Ausnahmebehandlung auslöst. Die Ausnahmebehandlung besteht zum Beispiel darin, dass die Maschine abgeschaltet oder in einen sicheren Zustand überführt wird.

Die Aufgabe wird ebenfalls mittels einer als Steuerungseinrichtung fungierenden Vorrichtung gelöst, die sich durch Mittel mit einer Implementation des Verfahrens auszeichnet. Insoweit ist die Erfindung auch eine Steuerungseinrichtung, die nach dem Verfahren wie hier und im Folgenden beschrieben arbeitet und dazu Mittel zur Durchführung des Verfahrens umfasst. Die Erfindung ist optional in Software implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinrichtung, in deren Speicher als Mittel zur Durchführung des Verfahrens und seiner Ausgestaltungen ein solches Computerprogramm geladen oder ladbar ist.

Das im Folgenden beschriebene Verfahren wird automatisch ausgeführt. Wenn im Folgenden Verfahrensschritte oder Verfahrensschrittfolgen beschrieben werden, bezieht sich dies auf Aktionen der jeweiligen Steuerungseinrichtung, die zum Beispiel aufgrund eines von dieser ausgeführten Computerprogramms oder unter Kontrolle des Computerprogramms erfolgen. Als Steuerungseinrichtung kommt zum Beispiel eine dem Inverter der elektrischen Maschine zugeordnete Steuerungseinrichtung in Betracht.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von den Begriffen Software oder Computerprogramm auch andere Implementationsmöglichkeiten, nämlich insbesondere eine Implementation in Firmware oder in Firm- und Software oder in Firm- und Hardware, umfasst sind.

Der Vorteil der Erfindung besteht in der sicheren Überwachung des Antriebsstrangs. Zudem werden bei einer Verwendung der HVDC-Leistung (Zwischenkreisleistung) viele andere Größen ab einer bestimmten Drehzahl indirekt plausibilisiert. Dadurch ist eine direkte Diagnose der den beiden Signalpfaden zugeführten Eingangs-/Messgrößen nicht notwendig. Alternativ kann auch die AC-Leistung die Grundlage der Überwachung bilden. Hierfür kann direkt die HVAC-Spannung U_{HVAC} gemessen werden. Es können aber auch die HVDC-Spannung U_{HVDC} gemessen werden und die HVAC-Spannung U_{HVAC} mit Hilfe des Tastgrads der Pulsweitenmodulation (duty factor) oder der Sollspannungen bestimmt werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche sowie der Beschreibung bei einer näheren Konkretisierung eines Merkmals in einem nachgeordneten Anspruch davon auszugehen, dass eine derartige Beschränkung in den jeweils vorangehenden Ansprüchen sowie einer allgemeineren Ausführungsform des gegenständlichen Verfahrens zur Überwachung des Antriebsstrangs eines Elektrofahrzeugs nicht vorhanden ist. Jede Bezugnahme in der Beschreibung auf Aspekte nachgeordneter Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Bei einer Ausführungsform des Verfahrens befinden sich ein Strommodell in einem der beiden Signalpfade und/oder ein Leistungsmodell in zumindest einem der beiden Signalpfade. Bei einer speziellen Ausführungsform befinden sich in einem der beiden Signalpfade ein Strommodell und in dem anderen Signalpfad ein Leistungsmodell.

Bei der Ausführungsform mit jeweils einem Strommodell und einem Leistungsmodell in einem der beiden Signalpfade wird mittels des Strommodells die Leistung/das Drehmoment mit Hilfe des HVAC-Stroms I_{HVAC} und abhängig von der jeweiligen elektrischen Maschine zusätzlich mit folgenden Größen berechnet:
- PSM und Reluktanzmaschine: zusätzlich wird die Rotorlage ϕ verwendet,
- fremderregte Synchronmaschine: zusätzlich wird die Rotorlage ϕ und der Erregerstrom verwendet,
- Induktionsmaschine: zusätzlich wird die Rotordrehzahl n verwendet.

Mittels des Leistungsmodells werden die HVDC-Leistung anhand der HVDC-Spannung und des HVDC-Stromes oder die AC-Leistung direkt anhand der HVAC-Ströme und HVAC-Spannung bestimmt, wobei die HVAC-Spannung auch auf Basis der HVDC-Spannung sowie des Tastgrads ermittelt werden kann.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch vereinfachte Übersichtsdarstellung mit einem Antriebssystem eines Antriebsstrangs eines Elektrofahrzeugs sowie mit einem Fahrzeugleitgerät,
- FIG 2: das Antriebssystem mit weiteren Einzelheiten,
- FIG 3: eine schematisch vereinfachte Darstellung einer ersten Ausführungsform einer Drehmomentüberwachung in Form eines Signalflussplans und
- FIG 4 bis FIG 6: weitere Ausführungsformen einer Drehmomentüberwachung.

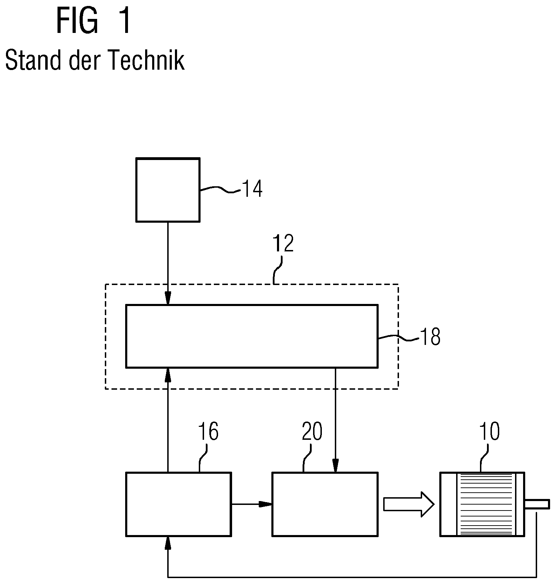

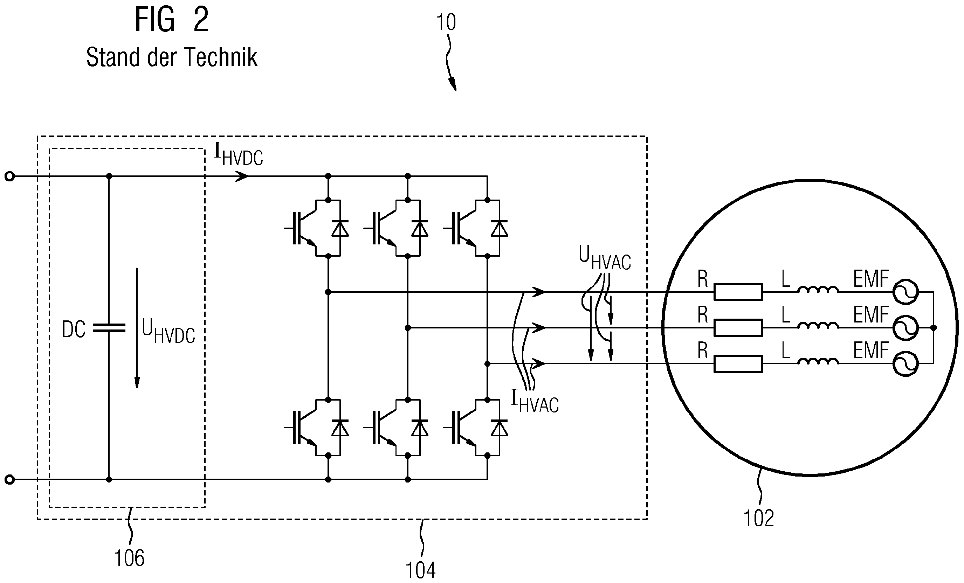

Wie eingangs ausgeführt, erfolgt im Rahmen der Überwachung der funktionalen Sicherheit einer elektrischen Maschine in einem Antriebsstrang eines Elektrofahrzeugs oder allgemein in einem Antriebssystem 10 (FIG 1, FIG 2) oftmals eine Überwachung des von der elektrischen Maschine 102 (FIG 1, FIG 2) des Antriebssystems 10 im Betrieb abgegebenen Drehmoments. Viele insoweit bekannte Ansätze beruhen darauf, das Drehmoment möglichst genau zu schätzen. Das geschätzte Drehmoment wird dann mit einem jeweils geforderten Drehmoment (Sollmoment) verglichen oder das geschätzte Drehmoment wird mit vorgegebenen Grenzwerten verglichen. Bei einer ein vorgegebenes oder vorgebbares Maß überschreitenden Abweichung von dem Sollmoment oder bei einer Überschreitung eines Grenzwertes erfolgt eine automatische Behandlung einer damit in Bezug auf den Antriebsstrang erkannten Ausnahmesituation. Die Behandlung der Ausnahmesituation kann zum Beispiel darin bestehen, dass ein sicherer Zustand der elektrischen Maschine 102 eingeleitet wird, zum Beispiel indem diese abgeschaltet oder in einen vorgegebenen oder vorgebbaren Zustand versetzt wird.

Die Darstellung in FIG 1 zeigt schematisch vereinfacht einen Teil eines Antriebsstrangs eines selbst nicht gezeigten Elektrofahrzeugs. Der Antriebsstrang umfasst in an sich bekannter Art und Weise ein Antriebssystem 10 in Form einer elektrischen Maschine 102 mit einem vorgeschalteten Inverter 104, welcher in ebenfalls grundsätzlich an sich bekannter Art und Weise aus einer Batteriegleichspannung einer nicht gezeigten Fahrzeugbatterie eine Wechselspannung zum Antrieb der elektrischen Maschine 102 erzeugt, sowie ein sogenanntes Fahrzeugleitgerät 12 (VCU - vehicle control unit).

Dem Fahrzeugleitgerät 12 wird mittels eines Sensors 14 ein Messwert für ein zum Beispiel vom Fahrer durch Betätigen des Gaspedals angefordertes Drehmoment zugeführt. Darüber hinaus wird dem Fahrzeugleitgerät 12 von einer Vorrichtung 16 zur Schätzung des vom Antriebssystem 10 abgegebenen Drehmoments ein Drehmomentschätzwert zugeführt. Der Drehmomentschätzwert wird als tatsächlich von der Maschine 102 abgegebenes Drehmoment verarbeitet (Istwert) und mittels eines Vergleichers 18 erfolgt ein Vergleich des geforderten Drehmoments (Sollwert) mit dem Drehmomentschätzwert. Bei einer einen vorgegebenen oder vorgebbaren Schwellwert überschreitenden Abweichung wird durch Ansteuerung eines Aktuators 20 ein sicherer Zustand der Maschine 102 ausgelöst. Gleiches - nämlich die Ansteuerung des Aktuators 20 zur Auslösung des sicheren Zustands - erfolgt auch dann, wenn im Zusammenhang mit der Ermittlung des Drehmomentschätzwerts festgestellt wird, dass dieser vorgegebene oder vorgebbare Grenzwerte überschreitet.

Um die funktionale Sicherheit des Antriebssystems 10 und des mit dem Antriebssystem 10 gebildeten Antriebsstrangs des jeweiligen Elektrofahrzeugs - oder allgemein die funktionale Sicherheit des mit der elektrischen Maschine 102 gebildeten Antriebssystems 10 - zu gewährleisten, muss erkannt werden, wenn das Drehmoment nicht mehr geschätzt werden kann oder nicht mehr mit der erforderlichen Genauigkeit geschätzt werden kann. Eine Ursache hierfür kann der Ausfall einer Messfunktion und/oder eine falsche Bestimmung eines für die Schätzung des Drehmoments notwendigen Werts sein.

Der Ausfall einer Messfunktion ist mittels grundsätzlich an sich bekannter Verfahren erkennbar. Nicht gelöst ist bisher eine volle Integrität der Drehmomentschätzung bei einem sensorlosen Betrieb. Ein sensorloser Betrieb findet zum Beispiel dann statt, wenn der sogenannte Rotorlagegeber ausgefallen ist und über sensorlose Verfahren eine Regelung der elektrischen Maschine 102 durch den Inverter 104 aufrechterhalten wird.

Die Darstellung in FIG 2 zeigt das Antriebssystem 10 gemäß FIG 1 mit weiteren, grundsätzlich an sich bekannten Details. Demnach wird die elektrische Maschine 102 mittels eines vorgeschalteten Inverters 104 gespeist, der aus einer in einem Zwischenkreis 106 anliegenden Hochspannungsgleichspannung U_{HVDC} in an sich bekannter Art und Weise den Wechselstrom I_{HVAC} zur Erzeugung des Drehfelds für die elektrische Maschine 102 generiert.

Bei dem hier vorgeschlagenen Ansatz ist vorgesehen, die Leistung und/oder das Drehmoment der elektrischen Maschine 102 mittels zweier paralleler, im Folgenden kurz als Signalpfade bezeichneter Mess- und Ermittlungspfade auf zwei unterschiedliche Arten zu ermitteln (diversitäre Redundanz) und die jeweils erhaltenen Ergebnisse zur Beurteilung des Zustands des Antriebssystems 10 oder des Antriebsstrangs miteinander zu vergleichen. Dadurch kann diagnostiziert werden, ob ein Fehler vorliegt. Dabei wird in einem der beiden Mess- und Ermittlungspfade die Zwischenkreisleistung oder die HVDC-Leistung (HVDC - Hochspannungsgleichstrom) berücksichtigt.

Dieser Vergleich findet direkt im Inverter 104 der elektrischen Maschine 102 statt. Nach dem hier vorgeschlagenen Ansatz wird demnach mittels des Inverters 104 das Drehmoment bzw. die Rotorlage/Drehzahl der elektrischen Maschine 102 sicher geschätzt. Der Inverter 104 steht in Verbindung mit einem übergeordneten Steuergerät, bei einem Elektrofahrzeug zum Beispiel mit einem Fahrzeugleitgerät 12 oder dergleichen. Dieses kann das geschätzte Drehmoment/die geschätzte Drehzahl verarbeiten und aufgrund dessen einen Befehl zur Einnahme des sicheren Zustands an das Antriebssystem 10 senden oder es kann Daten/Variablen an das Antriebssystem 10 senden, anhand derer das geschätzte Drehmoment/die geschätzte Drehzahl im Antriebssystem 10 überwacht wird.

Die folgenden Darstellungen zeigen unterschiedliche, auf dem hier vorgeschlagenen Ansatz basierende Ausführungsformen zur Drehmomentüberwachung oder zur Leistungsüberwachung.

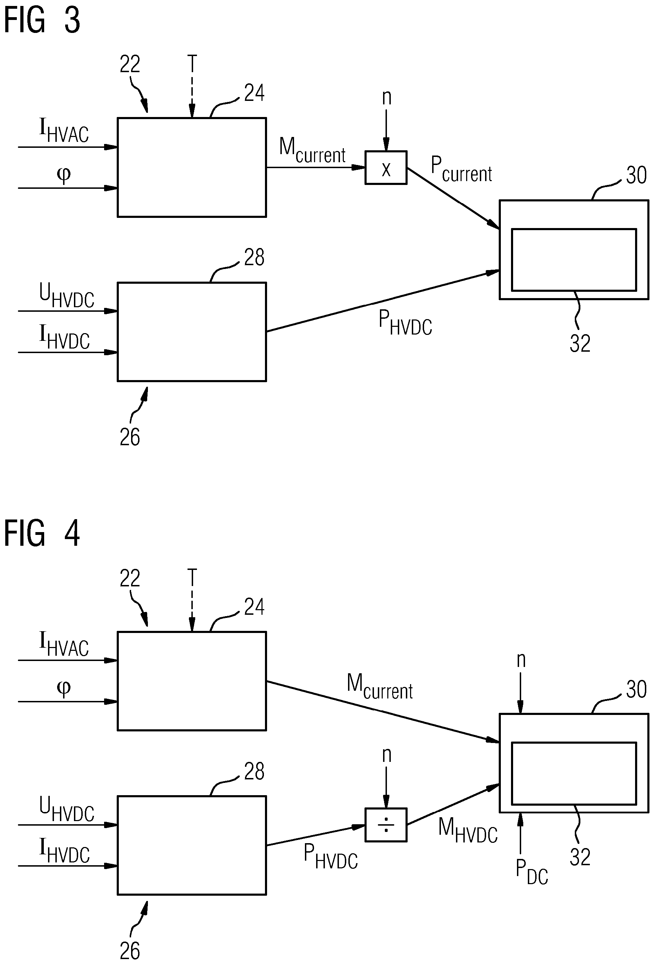

Bei der Ausführungsform gemäß FIG 3 wird in einem der beiden Mess- und Ermittlungspfade - im Folgenden kurz als erster Signalpfad 22 bezeichnet - das Drehmoment mittels eines sogenannten Strommodells 24 bestimmt. Mithilfe der HVAC-Ströme (siehe FIG 2: I_{HVAC}) und der Rotorlage ϕ werden die Ströme im dq-Koordinatensystem (d-Strom, q-Strom) bestimmt und mithilfe von zum Beispiel in einer LookUp-Tabelle hinterlegten Motordaten wird in Abhängigkeit von diesen Strömen das Drehmoment M_{Current} ermittelt. Zur Erhöhung der Genauigkeit kann optional bei Synchronmaschinen die Temperatur der Permanentmagnete und bei Asynchronmaschinen die Temperatur des Rotors oder der Rotorwiderstand berücksichtigt werden. Das als Ausgang des Strommodells 24 resultierende ermittelte Drehmoment M_{Current} wird mit einem Drehzahlmesswert n multipliziert und es ergibt sich ein erster Leistungswert P_{Current} (Leistungswert aus dem ersten Signalpfad 22).

Im zweiten, in der Darstellung in FIG 3 unteren Signalpfad 26 wird die HVDC-Leistung auf Basis der HVDC-Spannung (FIG 2: U_{HVDC}) und des DC-Stroms (FIG 2: I_{HVDC}) mittels eines Leistungsmodells 28 bestimmt. Am Ausgang des Leistungsmodells 28 ergibt sich ein zweiter Leistungswert P_{HVDC} (Leistungswert aus dem zweiten Signalpfad 26).

Die Ergebnisse aus beiden Signalpfaden 22, 26 (P_{Current}, P_{HVDC}) werden einem Vergleicher 30 zugeführt. Mittels des Vergleichers 30 erfolgt zum Beispiel ein Vergleich eines Betrags einer Differenz der beiden dem Vergleicher 30 aus den beiden Signalpfaden 22, 26 zugeführten Ergebnisse mit einem vorgegebenen oder vorgebbaren Schwellwert: | P_{Current} - P_{HVDC} | > Schwellwert. Wenn der Schwellwert überschritten ist, ist mittels des Vergleichs eine Ausnahmesituation erkannt, nämlich eine Ausnahmesituation, die darin besteht, dass einer der Signalpfade 22, 26 fehlerhaft ist und damit das geschätzte Drehmoment oder die geschätzte Rotorlage/Drehzahl fehlerhaft sein kann. Damit liegt grundsätzlich eine Ausnahmesituation bezüglich der elektrischen Maschine 102 vor und es können entsprechende Reaktionen eingeleitet werden (Abschalten oder Überführen in einen sicheren Zustand), so dass keine gefährliche Situation entsteht.

Ein wichtiger Aspekt des hier vorgeschlagenen Ansatzes ist, dass für dessen Funktionsfähigkeit eine bestimmte minimale Leistung notwendig ist oder sich ein fehlerhaftes Drehmoment in einer Leistung widerspiegeln muss, was wiederum eine bestimmte Drehzahl voraussetzt. Das Verfahren eignet sich somit für mittlere und hohe Drehzahlbereiche und weniger oder nicht für untere Drehzahlbereiche. Bei einer Ausführungsform wird der Vergleich der beiden Leistungen mittels des Vergleichers 30 erst dann aktiviert, wenn mindestens eine der in den beiden Signalpfaden 22, 26 ermittelten Leistungen einen vorgegebenen oder vorgebbaren Grenzwert (Th = Threshold, Grenzwert) überschreitet: P_{Current} > Th oder P_{HVDC} > Th. Alternativ zu einer solchen leistungsabhängigen Aktivierung des Vergleichers 30 kommt eine Aktivierung in Abhängigkeit von der HVAC-Spannung und des HVDC-Stroms in Betracht, derart, dass bei einer Überschreitung vorgegebener oder vorgebbarer Grenzwerte automatisch die Aktivierung des Vergleichers 30 erfolgt: U_{HVAC} > Th oder I_{HVAC} > Th. Die Aktivierung des Vergleichers 30 erfolgt mittels eines zum Beispiel vom Vergleicher 30 selbst umfassten Aktivierungsblocks 32.

Die jeweiligen Eingangsgrößen der beiden Signalpfade 22, 26 können direkt gemessen oder mittels Ersatzverfahren bestimmt werden. Wesentlich ist, dass die beiden Signalpfade 22, 26 unabhängig voneinander sind, dass also die Eingangsgrößen eines der beiden Signalpfade 22, 26 nicht mittels der Eingangsgrößen des komplementären Signalpfads 22, 26 bestimmt werden. Ist dies der Fall, so muss diese Größe durch ein gesondertes Verfahren abgesichert werden(z.B. die HVDC-Spannung U_{HVDC}, wenn die HVAC-Spannung U_{HADC} über die HVDC-Spannung U_{HVDC} und den Tastgrad ermittelt wird.) Dies gilt auch für die nachfolgend erläuterten Ausführungsformen.

Bei den nachfolgenden Erläuterungen weiterer Ausführungsformen stehen die Unterschiede zu der Ausführungsform gemäß FIG 3 im Vordergrund. Ansonsten gilt das oben Gesagte auch für die weiteren Ausführungsformen.

Bei der in FIG 4 gezeigten Ausführungsform befinden sich - wie in der Ausführungsform gemäß FIG 3 - in zwei parallelen Signalpfaden 22, 26 jeweils ein Strommodell 24 und ein Leistungsmodell 28 und deren Ausgänge werden direkt oder indirekt einem Vergleicher 30 zugeführt. Mittels des Strommodells 24 wird das Drehmoment M_{Current} ermittelt und als erster Drehmomentwert (Drehmomentwert aus dem ersten Signalpfad 22) dem Vergleicher 30 zugeführt. Dem Strommodell 24 werden - wie bei der Situation gemäß FIG 3 - als Eingangswerte die HVAC-Ströme I_{HVAC} und die Rotorlage ϕ sowie optional ein Temperaturmesswert T zugeführt. Dem Leistungsmodell 28 werden - ebenfalls wie bei der Situation gemäß FIG 3 - die HVDC-Spannung U_{HVDC} und der HVDC-Strom I_{HVDC} zugeführt. Am Ausgang des Leistungsmodells 28 ergibt sich ein Leistungswert P_{HVDC}. Nach einer Division durch einen Drehzahlmesswert n ergibt sich daraus ein zweiter Drehmomentwert M_{HVDC} (Drehmomentwert aus dem zweiten Signalpfad 26), der ebenfalls dem Vergleicher 30 zugeführt wird.

Bei der Ausführungsform gemäß FIG 4 werden zwar zwei voneinander abhängige Größen (Rotorlage ϕ und Drehzahl n; die Drehzahl n ergibt sich aus der zeitlichen Ableitung der Rotorlage ϕ) in den beiden Signalpfaden 22, 26 verwendet. Dies ist aber zulässig, weil diese über die zeitliche Ableitung zusammenhängen. Fehler mit gleicher Ursache prägen sich dadurch in den beiden Signalpfaden 22, 26 unterschiedlich aus und werden im Rahmen des Vergleichs mittels des Vergleichers 30 erkannt.

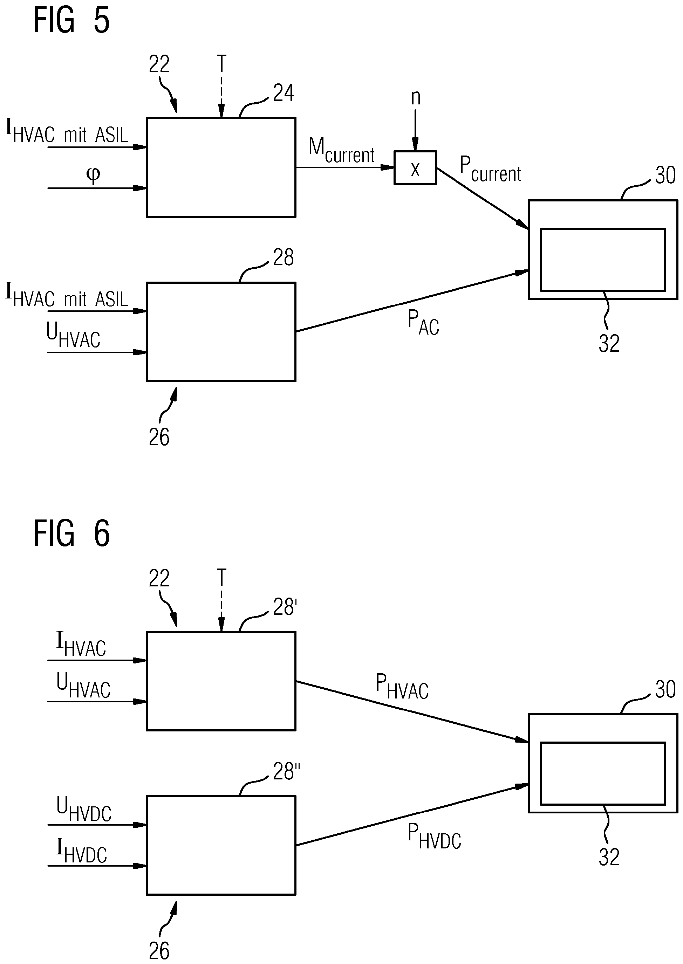

Die Ausführungsform gemäß FIG 5 unterscheidet sich von der Ausführungsform gemäß FIG 3 dadurch, dass als Eingänge für das Leistungsmodell 28 anstelle der HVDC-Spannung U_{HVDC} und des HVDC-Stroms I_{HVDC} die HVAC-Spannung U_{HVAC} und der HVAC-Strom I_{HVAC} verwendet werden und mittels des Leistungsmodells 28 entsprechend nicht mehr die Gleichstromleistung (FIG 3: P_{HVDC}), sondern die in der Darstellung in FIG 4 als P_{AC} bezeichnete Wechselstromleistung ermittelt wird. Auch dem Strommodell 24 wird der HVAC-Strom I_{HVAC} zugeführt. Die HVAC-Spannung U_{HVAC} kann gemessen werden oder auch mittels des sogenannten duty factors, also des Tastgrads der Pulsweitenmodulation, und der HVDC-Spannung U_{HVDC} berechnet werden (das Produkt aus duty factor und der HVDC-Spannung U_{HVDC} ergibt den Wert der HVAC-Spannung U_{HVAC} der entsprechenden Phase bzw. den Sollwert in Näherung).

Zur Einhaltung der Unabhängigkeit der beiden Signalpfade 22, 26 muss für den HVAC-Strom I_{HVAC} ein zusätzliches Verfahren zu dessen Überwachung implementiert sein. Die speziell überwachte und damit abgesicherte Eingangsgröße ist in der Darstellung entsprechend als "I_{HVAC} mit ASIL" bezeichnet (ASIL = automotive safety integrity level). Zur Absicherung der Eingangsgröße kommt eine Überwachung in Betracht, die zum Beispiel auf einer Anwendung der sogenannten Kirchhoffschen-Regeln basiert und die Summe der Ströme betrachtet, die sich in einem Stromkreis oder an einem Knotenpunkt bekanntlich zu Null addieren muss. Auch hier ist es - analog zu der Ausführungsform gemäß FIG 4 - möglich, anstelle der Leistungen die Drehmomente miteinander zu vergleichen.

Abschließend ist in der Darstellung in FIG 6 ein Ausführungsbeispiel zur Drehmomentüberwachung, nämlich in Form einer auf eine Leistungsüberwachung zurückgeführten Drehmomentüberwachung, gezeigt, das - anders als die Ausführungsformen gemäß FIG 3, FIG 4 und FIG 5 - ohne einen Messwert zur Rotorlage ϕ auskommt. Hier werden in beiden Signalpfaden 22, 26 Leistungsmodelle 28', 28" (erstes Leistungsmodell 28' im ersten Signalpfad 22; zweites Leistungsmodell 28" im zweiten Signalpfad 26) verwendet. Dem ersten Leistungsmodell 28' werden als Eingänge die HVAC-Spannung U_{HVAC} und der HVAC-Strom I_{HVAC} zugeführt. Dem zweiten Leistungsmodell 28" werden als Eingänge die HVDC-Spannung U_{HVDC} und der HVDC-Strom I_{HVDC} zugeführt. Hier ist zu beachten, dass die HVAC-Spannung U_{HVAC} entweder gemessen werden muss und nicht via duty_factor (Tastgrad) und HVDC-Spannung U_{HVDC} bestimmt werden darf, weil die HVDC-Spannung U_{HVDC} bereits im zweiten Signalpfad 26 verwendet wird, oder für die HVDC-Spannung U_{HVDC} zusätzliche Überwachungen implementiert werden müssen (z.B. in Form redundanter, diversitärer Messpfade der HVDC-Spannung U_{HVDC} mit anschließendem Vergleich beider Pfade). Auch hier können noch - analog zum zweiten Signalpfad 26 in FIG 4 - durch Division durch einen Drehzahlmesswert n die Drehmomente M_{HVAC}, M_{HVDC} berechnet werden und der Vergleich mittels des Vergleichers 30 auf Basis der Drehmomente M_{HVAC}, M_{HVDC} durchgeführt werden. Der Vorteil der Ausführungsform gemäß FIG 6 besteht darin, dass der HVDC-Strom I_{HVDC} nur einmal gemessen werden muss.

Wenn die Rotorlage ϕ mittels eines auf der Ausführungsform gemäß FIG 3, FIG 4 oder FIG 5 basierenden Verfahrens geschätzt werden soll, ist notwendig, dass ein Strom eingeprägt wird, auch wenn kein Drehmoment gefordert wird. Es kann also ein reiner d-Strom (nicht drehmomentbildender Strom) eingeprägt werden. Wenn kein Strom eingeprägt wird, ist die Leistung immer Null und es ist keine Prüfung möglich. Wenn ein hoher d-Strom eingeprägt wird, ergibt sich bei einer fehlerhaften Rotorlage ϕ /Drehzahl n ein Drehmoment/eine Leistung, denn real würde kein reiner d-Strom, sondern auch ein q-Strom eingeprägt. Dies führt zu einer Leistung, die im zweiten Signalpfad 26 gemessen werden würde. Der erste Signalpfad 22 mit dem Strommodell 24 liefert jedoch für das Drehmoment Null. In FIG 5 ist dazu die Besonderheit sicherer Eingangsgrößen (I_{HVAC} mit ASIL) gezeigt. Hier wird sichergestellt, dass die Stromamplitude ungleich Null ist.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Der hier vorgeschlagene Ansatz eignet sich für unterschiedliche Typen von elektrischen Maschinen 102. Bei der elektrischen Maschine 102 kann es sich um eine permanenterregte Synchronmaschine (PSM), aber genauso auch um eine Asynchronmaschine, eine Reluktanzmaschine oder eine fremderregte Synchronmaschine handeln. Bezüglich der Asynchronmaschine wird für das Strommodell 24 dann nicht die Rotorlage ϕ, sondern die Rotordrehzahl n benötigt. Bezüglich der fremderregten Synchronmaschine wird beim Strommodell 24 zusätzlich der Erregerstrom benötigt. Je nach elektrischer Maschine 102 unterscheidet sich die konkrete Ausführung des Strommodells 24. Bei einer Asynchronmaschine kann nur die Drehzahl n validiert werden (die Rotorlage ϕ ist bei einer Asynchronmaschine nicht von Bedeutung).

Einzelne im Vordergrund stehende Aspekte der hier eingereichten Beschreibung lassen sich damit kurz wie folgt zusammenfassen: Die hier vorgeschlagene Neuerung ist zunächst ein Verfahren zur Überwachung eines eine elektrische Maschine 102 umfassenden Antriebsstrangs eines Elektrofahrzeugs. Im Rahmen des Überwachungsverfahrens werden in zumindest zwei parallelen, diversitären Signalpfaden 22, 26 jeweils ein Wert bezüglich einer von der Maschine 102 abgegebenen oder aufgenommenen Leistung und/oder bezüglich eines von der Maschine 102 abgegebenen Drehmoments ermittelt. Dabei wird in zumindest einem der zumindest zwei Signalpfade 22, 26 eine HVDC-Zwischenkreisleistung der elektrischen Maschine 102 oder die HVAC-Hochspannungswechselstromleistung berücksichtigt. Zur Beurteilung eines Zustands des Antriebsstrangs werden die zumindest zwei Werte zum Vergleich einem Vergleicher 30 zugeführt, welcher in Abhängigkeit vom Ergebnis des Vergleichs gegebenenfalls eine Ausnahmebehandlung auslöst. Das Verfahren ist zum Beispiel in Software implementiert und ein entsprechendes Computerprogramm ist zum Beispiel in einen Speicher des Inverters 104 der elektrischen Maschine 102 oder eine sonstige Steuerungseinrichtung geladen. Insoweit ist die hier vorgeschlagene Neuerung auch ein solches Computerprogramm mit einer Implementation des Verfahrens oder eine nach dem Verfahren arbeitende Steuerungseinrichtung bzw. ein nach dem Verfahren arbeitender Inverter 104 einer elektrischen Maschine 102. Der hier vorgestellte Ansatz erlaubt eine sichere Überwachung des Drehmoments, der Rotorlage ϕ und der Drehzahl n von elektrischen Maschinen 102 mit Hilfe der elektrischen Leistung. Das Verfahren kann auch für die Überprüfung der Rotorlage ϕ und/oder der Drehzahl n genutzt werden. Des Weiteren ist eine sichere Drehmomentschätzung ohne Rotorlagegeber möglich.

## Patentansprüche

1. Verfahren zur Überwachung eines eine elektrische Maschine (102) und einen der elektrischen Maschine (102) vorgeschalteten Inverter (104) umfassenden Antriebssystems (10),
**dadurch gekennzeichnet,**
**dass** in zumindest zwei parallelen, diversitären Signalpfaden (22, 26) jeweils ein Wert bezüglich einer von der Maschine (102) abgegebenen oder aufgenommenen Leistung und/oder bezüglich eines von der Maschine (102) abgegebenen Drehmoments ermittelt wird,
**dass** in zumindest einem der zumindest zwei Signalpfade (22, 26) eine Zwischenkreisleistung des Inverters (104) oder die HVAC-Hochspannungswechselstromleistung der elektrischen Maschine (102) berücksichtigt wird und
**dass** die zumindest zwei Werte zum Vergleich einem Vergleicher (30) zugeführt werden sowie in Abhängigkeit vom Ergebnis des Vergleichs gegebenenfalls mittels des Vergleichers (30) eine Ausnahmebehandlung ausgelöst wird.

2. Verfahren nach Anspruch 1, mit einem Strommodell (24) in einem der beiden Signalpfade (22, 26).

3. Verfahren nach Anspruch 1 oder 2, mit einem Leistungsmodell (28) in zumindest einem der beiden Signalpfade (22, 26).

4. Verfahren nach einem der Ansprüche 1 bis 3, wobei der Vergleicher (30) aktiviert wird, wenn zumindest ein in einem der beiden Signalpfade (22, 26) ermittelter Wert einen vorgegebenen oder vorgebbaren Grenzwert überschreitet.

5. Computerprogramm mit Programmcodemitteln, um alle Schritte des Verfahrens nach einem der Ansprüche 1 bis 4 durchzuführen, wenn das Computerprogramm mittels eines Fahrzeugleitgeräts (12) eines Elektrofahrzeugs ausgeführt wird.

6. Computerprogrammprodukt mit Programmcodemitteln, die auf einem computerlesbaren Datenträger gespeichert sind, um alle Schritte des Verfahrens nach einem der Ansprüche 1 bis 4 durchzuführen, wenn das Computerprogrammprodukt mittels eines Fahrzeugleitgeräts (12) eines Elektrofahrzeugs ausgeführt wird.

7. Digitales Speichermedium mit elektronisch auslesbaren Steuersignalen, die so mit einem Inverter (104) einer elektrischen Maschine (102) zusammenwirken können, dass ein Verfahren nach einem der Ansprüche 1 bis 4 ausgeführt wird.

8. Elektrische Maschine (102) mit einem Inverter (104), welcher eine Verarbeitungseinheit und einen Speicher umfasst, wobei in den Speicher des Inverters (104) ein Computerprogramm nach Anspruch 5 geladen ist, das im Betrieb der elektrischen Maschine (102) mittels der Verarbeitungseinheit des Inverters (104) ausgeführt wird.
